# EUROPEAN PATENT SPECIFICATION

(11) **EP 3 731 301 B1**
(45) Date of publication and mention of the grant of the patent: **10.11.2021**
(21) Application number: 19192799.5
(22) Date of filing: 21.08.2019
(51) Int. Cl.: H01M 10/613, H01M 10/6562, H01M 10/6554, H01M 50/20, H01M 50/24, H01M 50/30

(54) **ENERGY STORAGE DEVICE**
ENERGIESPEICHERVORRICHTUNG
DISPOSITIF DE STOCKAGE D'ÉNERGIE

(30) Priority: 26.04.2019 CN 201920584336 U
(43) Date of publication of application: 28.10.2020
(73) Proprietor: Contemporary Amperex Technology Co., Limited, Jiaocheng District Ningde City, Fujian 352100 (CN)
(72) Inventor: LIN, Jiubiao, Ningde City, Fujian 352100 (CN); XIANG, Yanhuo, Ningde City, Fujian 352100 (CN); QIAN, Mu, Ningde City, Fujian 352100 (CN); DU, Jie, Ningde City, Fujian 352100 (CN)
(74) Representative: Thoma, Michael

(56) References cited:
- EP-A2- 3 125 334
- JP-A- 2013 089 449
- US-A1- 2005 079 408
- US-A1- 2014 299 393
- US-B2- 9 203 068

## Description

### FIELD

The disclosure relates to the technical field of energy storage apparatus, and in particular to an energy storage device.

### BACKGROUND

With the development of new energy electric vehicle, governments and industries put higher safety requirements for vehicle batteries. In the newly drafted national standards, a new "thermal diffusion test" requirement is added, in which a battery pack or system shall provide a thermal event warning signal 5 minutes before the passenger compartment is in danger due to thermal diffusion caused by thermal runaway of a single battery. As to requirements for a battery pack, there shall be no open flame or explosion outside the battery pack within 5 minutes after the thermal runaway occurs. For a current NCM811 battery, the higher the energy density is, the more severe the thermal runaway becomes. At present, the battery pack cover (composite material, aluminum stamping) cannot meet the protection requirements of the battery thermal runaway. US2005079408A1 discloses a battery pack including three battery module units, a pair of upper and lower outer plates, a pair of side-coupling plates for coupling both sides of that pair of outer plates to each other. EP3125334A2 discloses an energy storage apparatus which includes: an energy storage device; an outer case which accommodates the energy storage device; 5 and a discharge portion which is disposed on the outer case, the discharge portion having one or more openings through which a gas, which has passed through a flow passage formed between the partition plate and the side wall, is discharged from the outer case. US9203068B2 discloses a battery pack including a cell array defining an upper surface and a housing defining a raised portion extending along and above a length of the array such that the 10 raised portion and upper surface define a vent manifold therebetween which may be configured to collect gases generated by the array. US20140299393A1 discloses buffer members between a bottom plate portion of a battery frame 64 and an inner bottom surface of a case body. JP2013089449A discloses a structure for mounting a battery module including an upper panel body covering an upper portion of the battery module which is fixed inside the structure.

Therefore, a new energy storage device is required.

### SUMMARY

According to the invention, there is provided an energy storage device as described in the appended claims. It is an object to improve the thermal runaway protection performance of the energy storage device and meet the thermal runaway protection requirements of the energy storage device.

In one aspect, the invention provides an energy storage device comprising: an energy storage unit comprising a top wall and a side wall connected to a periphery of the top wall; and a protection assembly disposed to cover the top wall, wherein the protection assembly comprises a protection plate and a guide plate connected to a periphery of the protection plate, wherein the protection plate and the guide plate are connected at a predetermined angle, the protection plate is disposed corresponding to the top wall to form an air flow passage between the protection plate and the top wall, at least a portion of the guide plate and the side wall are spaced apart to form a guide chamber between the guide plate and the side wall, and the air flow passage is in communication with the guide chamber; the protection plate comprises an air flow recess disposed corresponding to the energy storage unit, wherein the air flow recess is formed by the protection plate protruding away from the energy storage unit; the energy storage unit is a secondary battery, which comprises a top cover and a housing connected to a periphery of the top cover, wherein the top wall is a top surface of the top cover, and the side wall is a side surface of the housing and the energy storage device is a battery pack which comprises a case having an opening, and a plurality of the secondary batteries are located in the case, wherein the battery pack further comprises a cover disposed at the opening, and the protection assembly is disposed between the cover and the secondary batteries; or the energy storage unit is a battery module which comprises a plurality of secondary batteries disposed side by side, wherein the secondary battery comprises a top cover and a housing connected to a periphery of the top cover, the top wall is a top surface of the top cover, and the side wall is a side surface of the housing, and the energy storage device is a battery pack which comprises a case having an opening, and a plurality of the battery modules are located in the case, wherein the battery pack further comprises a cover disposed at the opening, and the protection assembly is disposed between the cover and the battery modules; and the top cover of the secondary battery comprises a vent, the air flow recess comprises a first region and a second region located at a periphery of the first region, the first region is disposed corresponding to the vent, and the first region has a thickness larger than that of the second region.

According to an aspect of embodiments of the disclosure, the air flow recess extends in a first direction in the protection plate; and the protection plate further comprises a reinforcing portion extending in a second direction intersecting with the first direction, wherein the reinforcing portion is formed by the protection plate protruding away from the energy storage unit.

According to an aspect of embodiments of the disclosure, the battery module further comprises a module frame.

According to an aspect of embodiments of the disclosure, the protection plate and the guide plate are integrally formed; or the protection plate and the guide plate are separately disposed, the guide plate is L-shaped and comprises a connecting plate and a baffle plate connected at a predetermined angle, and the baffle plate is detachably connected to the protection plate through the connecting plate.

According to an aspect of embodiments of the disclosure, a cushioning member is provided at an outer surface of the protection plate away from the energy storage unit.

According to an aspect of embodiments of the disclosure, the predetermined angle is in a range of 90 degree to 120 degree.

In the disclosure, the energy storage device includes an energy storage unit and a protection assembly. The protection assembly is disposed at the top wall of the energy storage unit. The protection assembly includes a protection plate and a guide plate. An air flow passage can be formed between the protection plate and the top wall. A guide chamber can be formed between the guide plate and the side wall. When a hot air flow occurs due to thermal runaway of the energy storage unit, the hot air flow can flow to the energy storage unit along the air flow passage and the guide chamber, rather than directly rushing to the top of the energy storage device. It can retard the process during which the hot air flow breaks the protection assembly or a cover of the energy storage device such that the energy storage device meets requirements for the thermal runaway protection. Therefore, the disclosure can improve the thermal runaway protection performance of the energy storage device and meet the thermal runaway protection requirements of the energy storage device.

### BRIEF DESCRIPTION OF THE DRAWINGS

Features, advantages, and technical effects of exemplary embodiments of the present disclosure will be described below with reference to accompanying drawings and description of non-limiting embodiments. Identical or similar reference numerals indicate the same or similar features.
Fig. 1 is a structural schematic diagram of an energy storage device according to an embodiment of the disclosure.
Fig. 2 is a top view of an energy storage device according to an embodiment of the disclosure.
Fig. 3 is a sectional view along A-A in Fig. 2.
Fig. 4 is an enlarged view of a portion in Fig. 3.
Fig. 5 is a structural schematic diagram of an energy storage unit according to an embodiment of the disclosure.
Fig. 6 is a structural schematic diagram of a protection assembly according to an embodiment of the disclosure.
Fig. 7 is an exploded structural view of an energy storage device according to an embodiment of the disclosure.
Fig. 8 is a structural schematic diagram of a protection assembly according to another embodiment of the disclosure.
Fig. 9 is a structural schematic diagram of Fig. 8 in another view.
Fig. 10 is a structural schematic diagram of an energy storage device according to another embodiment of the disclosure.
Fig. 11 is an exploded structural view of Fig. 10.
Fig. 12 is a partial sectional view of Fig. 10.

### Reference signs in the drawings:

- 110: case;
- 120: cover;
- 200: energy storage unit;
- 200a: secondary battery;
- 200b: battery module;
- 210: top wall;
- 211: vent;
- 220: side wall;
- 230: housing;
- 231: side surface;
- 240: top cover;
- 241: top surface;
- 250: electrode assembly;
- 260: electrode terminal;
- 270: module frame;
- 271: end plate;
- 272: side plate;
- 280: module cover;
- 300: protection assembly;
- 310: protection plate;
- 311: air flow recess;
- 311a: first region;
- 311b: second region;
- 312: reinforcing portion;
- 320: guide plate;
- 321: connecting plate;
- 322: baffle plate;
- 330: air flow passage;
- 340: guide chamber;
- 400: cushioning member;
- 500: mounting column;
- Y: first direction;
- X: first direction.

### DETAILED DESCRIPTION

Features and exemplary embodiments of various aspects of the disclosure will be described in detail below. In the following detailed description, numerous specific details are set forth to provide a full understanding of the disclosure. However, it shall be apparent to the person skilled in the art that the present disclosure may be implemented without some of the details. The following description of the embodiments is merely made to provide a better understanding of the disclosure by showing examples of the disclosure. In the figures and the following description, at least some of well-known structures and techniques are not shown to avoid unnecessarily obscuring the disclosure. Further, for clarity, size of a portion of the structure may be exaggerated. Furthermore, features, structures, or characteristics described hereinafter may be combined in any suitable manner into one or more embodiments.

In the description of the present disclosure, it should be noted that, unless otherwise stated, the meaning of "a plurality" is two or more; the orientation or positional relationship indicated by the terms "upper", "lower", "left", "right" and the like is merely for the purpose of describing the present disclosure and simplifying the description, and is not intended to indicate or imply that the device or component referred to has a particular orientation, is constructed and operated in a particular orientation, and therefore cannot be understood to be a limitation of the present disclosure. Moreover, the terms "first", "second", and the like are configured for descriptive purposes only and are not to be construed as indicating or implying relative importance.

Orientations in the following description refers to directions as shown in the figures, and are not intended to define specific structure of the embodiments of the present disclosure. In the description of the present disclosure, it should be noted that, unless otherwise stated, the terms "installation", "connected to", and "connected with" are to be understood broadly, and may be, for example, a fixed connection, a disassemble connection, or an integral connection; they can be connected directly or indirectly through an intermediate medium. The specific meaning of the above terms in the present disclosure can be understood by the person skilled in the art according to actual circumstance.

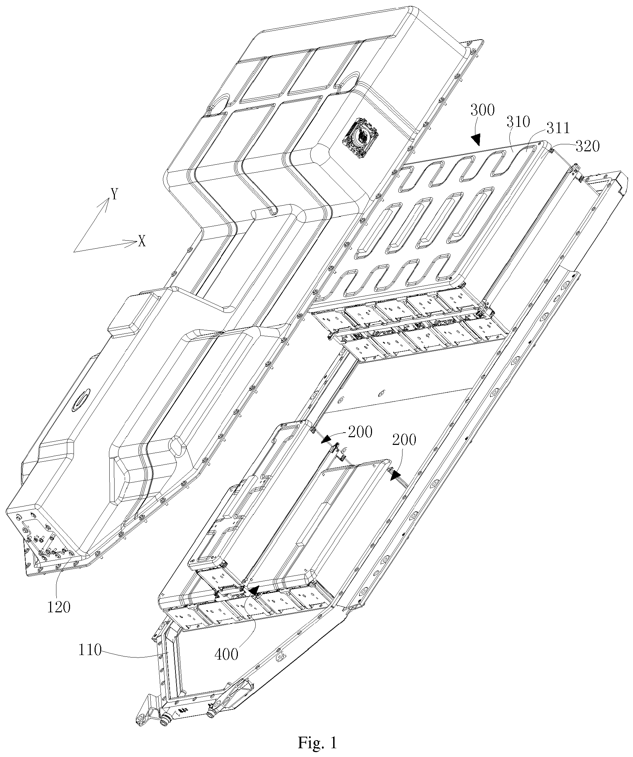

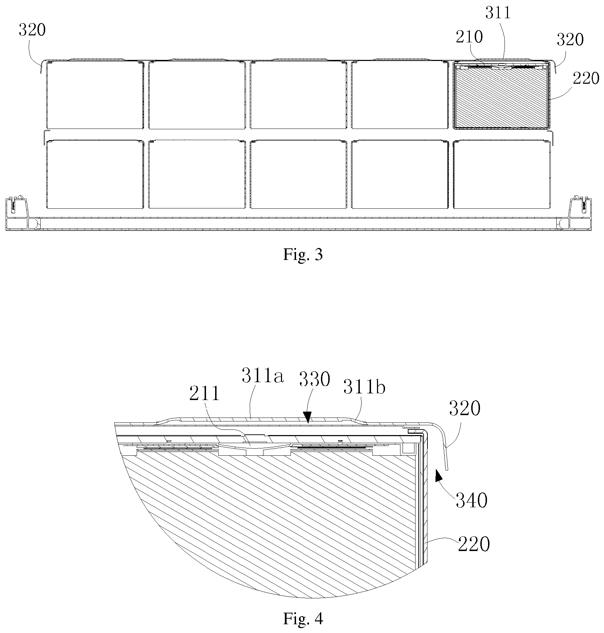

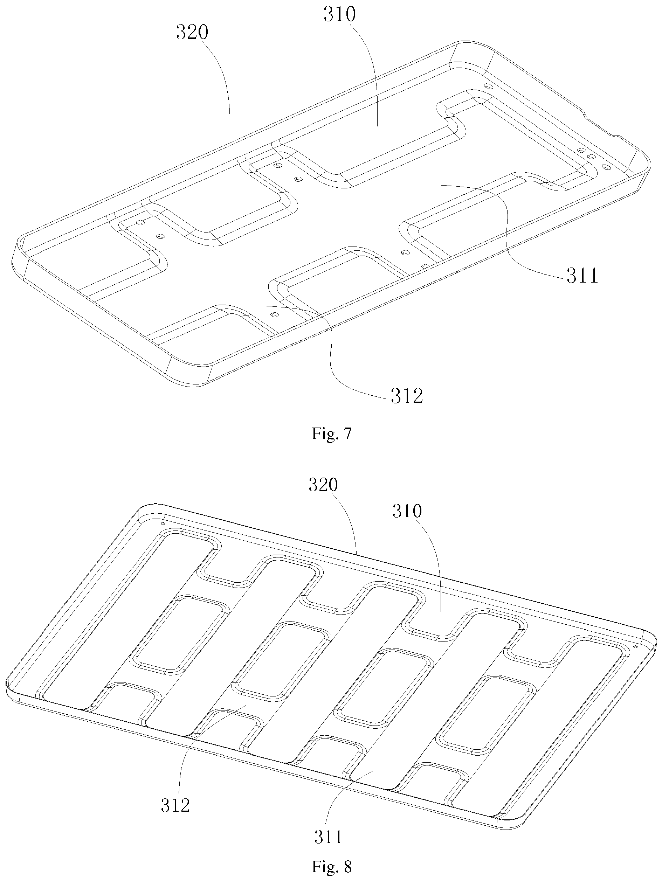

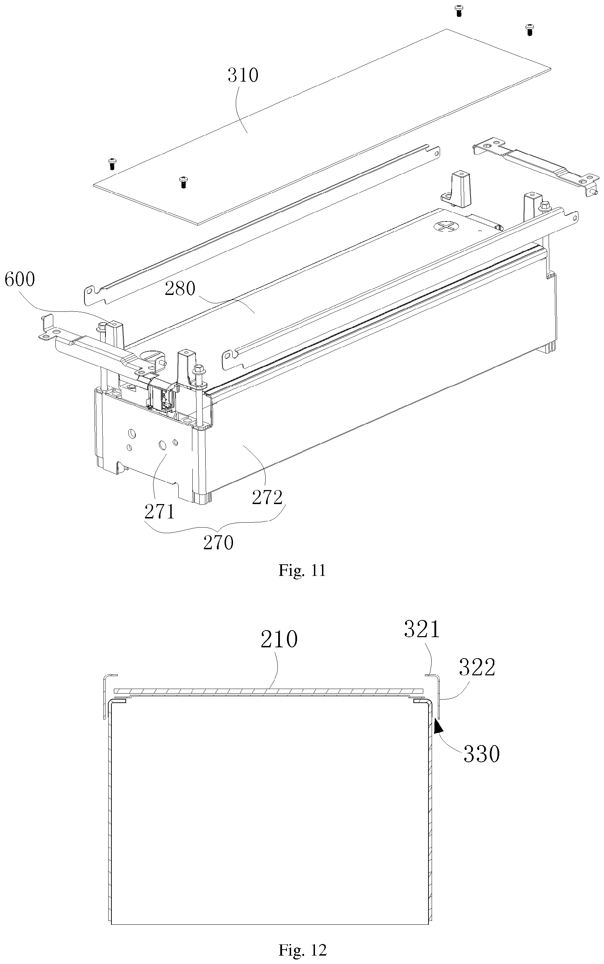

For better understanding of the disclosure, an energy storage device according to embodiments of the disclosure will be described below in detail with reference to Figs. 1 to 12.

Referring to Fig. 1 to Fig. 4, an energy storage device according to an embodiment of the disclosure comprising: an energy storage unit 200 comprising a top wall 210 and a side wall 220 connected to a periphery of the top wall 210; and a protection assembly 300 disposed to cover the top wall 210, which comprises a protection plate 310 and a guide plate 320 connected to a periphery of the protection plate 310. The protection plate 310 and the guide plate 320 are connected at a predetermined angle. The protection plate 310 is disposed corresponding to the top wall 210 to form an air flow passage 330 between the protection plate 310 and the top wall 210. At least a portion of the guide plate 320 and the side wall 220 are spaced apart to form a guide chamber 340 between the guide plate 320 and the side wall 220. The air flow passage 330 is in communication with the guide chamber 340.

The predetermined angle is not limited herein. Preferably, the predetermined angle is in a range of 90 degree to 120 degree. Further preferably, the predetermined angle is in a range of 95 degree to 105 degree. The airflow flowing along the guide chamber 340 flows in a direction slightly away from the side wall 220 of the energy storage unit 200. Thus, it prevents the airflow from further heating the energy storage unit 200, retards the intensification of the severe thermal runaway of the energy storage unit 200, and facilitates the manufacture and formation of the guide plate 320 and the protection plate 310.

In the disclosure, the energy storage device comprises an energy storage unit 200 and a protection assembly 300. The protection assembly 300 is disposed to cover the top wall 210 of the energy storage unit 200. The protection assembly 300 comprises a protection plate 310 and a guide plate 320. An air flow passage 330 can be formed between the protection plate 310 and the top wall 210. A guide chamber 340 can be formed between the guide plate 320 and the side wall 220. When a hot air flow occurs due to thermal runaway of the energy storage unit 200, the hot air flow can flow to the energy storage unit 200 along the air flow passage 330 and the guide chamber 340, rather than directly rushing to the top of the energy storage device. It can retard the process during which the hot air flow breaks the protection assembly 300 or a cover 120 of the energy storage device such that the energy storage device meets requirements for the thermal runaway protection. Therefore, the disclosure can improve the thermal runaway protection performance of the energy storage device and meet the thermal runaway protection requirements of the energy storage device.

It can be understood that the arrangement of the energy storage device is not limited herein. For example, the energy storage device is a battery pack or a battery module 200b. The arrangement of the energy storage unit 200 is not limited herein. The energy storage unit 200 may be a single battery module 200b, or a unit composed of a plurality of battery modules 200b, or a single secondary battery 200a, or a unit composed of a plurality of secondary batteries 200a. When the energy storage device is a battery pack, the energy storage device comprises a case 110 for accommodating the energy storage unit 200 and a cover 120 disposed at an opening of the case 110.

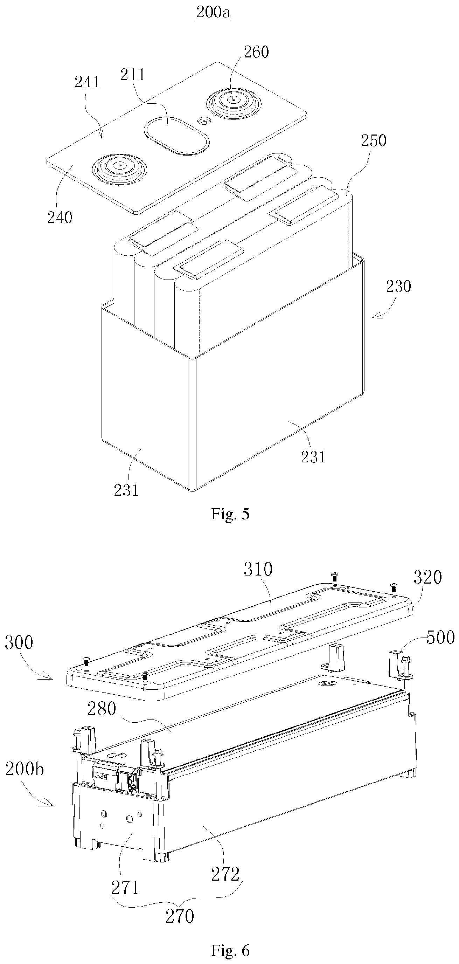

In one embodiment of the invention, referring to Fig. 5, the energy storage unit 200 is a secondary battery 200a, which comprises a housing 230 having an opening, and a top cover 240 disposed to cover the opening of the housing 230, an electrode assembly 250 disposed in the housing 230 and an electrode terminal 260 disposed on the top cover 240 and electrically connected to the electrode assembly 250. Then, the top wall 210 is a top surface 241 of the top cover 240 away from the housing 230, and the side wall 220 is a side surface 231 of the housing 230.

When the energy storage unit 200 is the secondary battery 200a, the energy storage device can be a battery module 200b or a battery pack. For example, the energy storage device is the battery module 200b, and a plurality of secondary batteries 200a are arranged side by side to form the battery module 200b. The protection assembly 300 is disposed to cover the top covers 240 of the secondary batteries 200a.

In an embodiment of the invention, the energy storage device is a battery pack, and a plurality of secondary batteries 200a directly form the battery pack. The battery pack has a case 110 for accommodating the secondary batteries 200a. The case 110 has an opening. The protection assembly 300 is disposed at the opening of the case 110. The battery pack further includes a cover 120 disposed to cover the opening of the case 110. The protection assembly 300 is disposed between the cover 120 and the secondary batteries 200a.

In the above embodiments, when thermal runaway of the secondary battery 200a occurs to generate a hot air flow, the hot air flow can flow from a region between the top surface 241 of the top cover 240 and the protection plate 310 to a region between the guide plate 320 and the side surface 231 of the housing 230 due to the blocking of the protection assembly 300. Thus, the hot air flow is guided toward the secondary battery 200a. Accordingly, the process during which the hot air flow breaks the protection assembly 300 or the cover 120 can be retarded such that the battery module 200b or the battery pack can meet the thermal runaway protection requirements.

In another embodiment of the invention, the energy storage unit 200 is a battery module 200b, which comprises a plurality of secondary batteries 200a disposed side by side, wherein the secondary battery 200a includes a housing 230 having an opening and a top cover 240 disposed at the opening of the housing 230, the top wall 210 is a top surface 241 of the top cover 240, and the side wall 220 is a side surface 231 of the housing 230. The energy storage device is a battery pack, and a plurality of battery modules 200b form the battery pack. The battery pack comprises a case 110 having an opening, and a plurality of battery modules 200b are located in the case 110. The battery pack further comprises a cover 120 disposed to cover the opening of the case 110. The protection assembly 300 is disposed between the cover 120 and the secondary batteries 200a. When the thermal runaway of the secondary battery 200a occurs to generate a hot air flow, the protection assembly 300 can retard the process during which the hot air flow breaks the protection assembly 300 or the cover 120, such that the battery pack can meet the thermal runaway protection requirements.

In any of the above embodiments, there are various ways in which the secondary batteries 200a are arranged side by side to form the battery module 200b. In some optional embodiments, the battery module 200b further includes a module frame 270. The module frame 270 comprises two end plates 271 disposed opposite to each other in a direction in which the secondary batteries 200a are arranged and two side plates 272 connecting to the two end plates 271. The end plates 271 and the side plates 272 are connected to each other to enclose the secondary batteries 200a between the two end plates 271 and the two side plates 272. Then, the side plate 272 can be located between the side surface 231 of the housing 230 of the secondary battery 200a and the guide plate 320, i.e., at least a portion of the side plate 272 is located in the guide chamber 340; or the side plate 272 can be located outside of the guide chamber 340. When an extending height of the end plate 271 in a height direction of the battery module 200b is sufficiently high, the end plate 271 can also be located between the side surface 231 of the housing 230 of the secondary battery 200a and the guide plate 320, i.e., at least a portion of the end plate 271 is located in the guide chamber 340. When the extending height of the end plate 271 in the height direction of the battery module 200b is not sufficiently high, the end plate 271 is located outside of the guide chamber 340.

In other alternative embodiments, the module frame 270 comprises two end plates 271 disposed in a direction in which the secondary batteries 200a are arranged, and a fixing belt (not shown) disposed around the outer circumference of the secondary battery 200a and the end plates 271. The secondary batteries 200a arranged side by side are fixed by the end plate 271 and the fixing belt. Then, the fixing belt can be located between the side surface 231 of the housing 230 of the secondary battery 200a and the guide plate 320, i.e., at least a portion of the fixing belt is located in the guide chamber 340; or the fixing belt may be located outside of the guide chamber 340. When the extending height of the end plate 271 in the height direction of the battery module 200b is sufficiently high, the end plate 271 is located between the side surface 231 of the housing 230 of the secondary battery 200a and the guide plate 320, i.e., at least a portion of the end plate 271 is located in the guide chamber 340. When the extending height of the end plate 271 in the height direction of the battery module 200b is not sufficiently high, the end plate 271 is located outside of the guide chamber 340.

In other optional embodiments, the battery module 200b further comprises a module upper cover 280 disposed above the secondary batteries 200a. The protection assembly 300 is located at a side of the module upper cover 280 away from the secondary batteries 200a, i.e., the module upper cover 280 is located between the protection assembly 300 and the top cover 240. Accordingly, when the thermal runaway of the secondary battery 200a occurs to generate a hot air flow, the process during which the secondary battery 200a breaks the protection assembly 300 can be retarded, such that the battery module 200b can meet the thermal runaway protection requirements.

Referring to Figs. 6-9, the arrangement of the protection plate 310 is not limited herein. In an embodiment not according to the invention, the protection plate 310 can be a flat plate with a uniform thickness. In an embodiment according to theinvention, the protection plate 310 comprises an air flow recess 311 disposed corresponding to the energy storage unit 200. The air flow recess 311 is formed by the protection plate 310 protruding away from the energy storage unit 200.

In this embodiment, with the air flow recess 311, the spacing between the protection plate 310 and the energy storage unit 200 can be ensured, and the air flow passage 330 can be formed, so that the hot air flow generated by the energy storage unit 200 can smoothly flow to the guide chamber 340 through the air flow passage 330.

Furthermore, in order to improve the strength of the protection assembly 300, the protection plate 310 further comprises a reinforcing portion 312 formed by the protection plate 310 protruding away from the energy storage unit 200. The air flow recess 311 extends in a first direction while the reinforcing portion 312 extends in a second direction intersecting with the first direction.

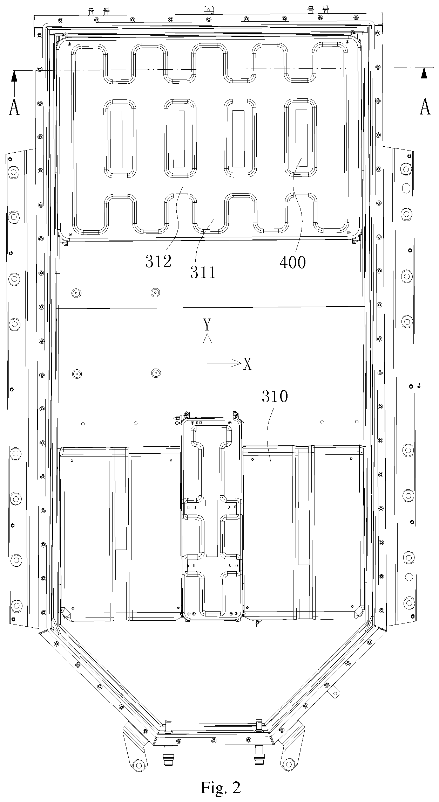

In these optional embodiments, when the reinforcing portion 312 is provided and the extending directions of the reinforcing portion 312 and the air flow recess 311 intersect with each other, the strength of the protection plate 310 can be improved, and the protection plate 310 can be prevented from being deformed or even damaged under the impact of the airflow. The first direction and the second direction are not limited herein. To further increase the strength of the protection plate 310, the first direction and the second direction can be vertical to each other. For example, the first direction is a Y direction in Fig. 2, and the second direction is an X direction in Fig. 2.

The arrangement of the portions where the reinforcing portion 312 and the air flow recess 311 intersect each other is not limited herein. The portions where the reinforcing portion 312 and the air flow recess 311 intersect with each other have smoothly transition to reduce the manufacturing difficulty of the protection plate 310.

In the above embodiments, the air flow recess 311 extends in a first direction to have a kidney shape, a rectangular shape or other elongated shape, as long as the air flow recess 311 has an extending length in the first direction that is larger than its extending width in the second direction. Similarly, the reinforcing portion 312 extends in a second direction to have a kidney shape, a rectangular shape or other elongated shape as long as the reinforcing portion 312 has an extending length in the second direction that is larger than its extending width in the first direction.

When the energy storage device comprises the secondary battery 200a, the top cover 240 of the secondary battery 200a comprises a vent 211. In order to further increase the strength of the protection assembly 300, the air flow recess 311 is disposed corresponding to the vent 211 of each secondary battery 200a. When the secondary battery 200a is heated to generate an air flow, the air flow can be most easily escaped from the vent 211 of the secondary battery 200a. The air flow recess 311 is disposed corresponding to the vent 211, so that the air flow can promptly move along the air flow recess 311, and the efficiency of the air flow flowing into the interior of the case 110 can be improved.

Furthermore, in an embodiment according to the invention, the air flow recess 311 comprises a first region 311a disposed corresponding to the vent 211 and a second region 311b located at a periphery of the first region 311a. The thickness of the first region 311a is larger than the thickness of the second region 311b.

The thicknesses of the first region 311a and the second region 311b is not limited herein. For example, the thickness of the first region 311a is 2 mm, and the thickness of the second region 311b is 1 mm.

The first region 311a is disposed corresponding to the vent 211. The first region 311a is most susceptible to the impact of the airflow. With the increased thickness of the first region 311a, the strength of the first region 311a can be increased to prevent the first region 311a from being damaged due to impact of the strong airflow, and the life time of the protection plate 310 can be improved. Also, since the thickness of the second region 311b is smaller than the thickness of the first region 311a, it can save material, reduce the weight of the protection plate 310, and increase the energy density ratio of the energy storage device.

Furthermore, in some optional embodiments, the thickness of the other regions of the protection plate 310 except the first region 311a and the second region 311b and the thickness of the guide plate 320 are same with the thickness of the second region 311b. That is to say, the protection plate 310 and the guide plate 320 of the first protection unit have the same thickness except for the first region 311a, thus it can save material and reduce cost.

The connection between the protection plate 310 and the guide plate 320 is not limited herein. The protection plate 310 and the guide plate 320 can be integrally formed such that the connection strength and sealing performance between the protection plate 310 and the guide plate 320 can be improved.

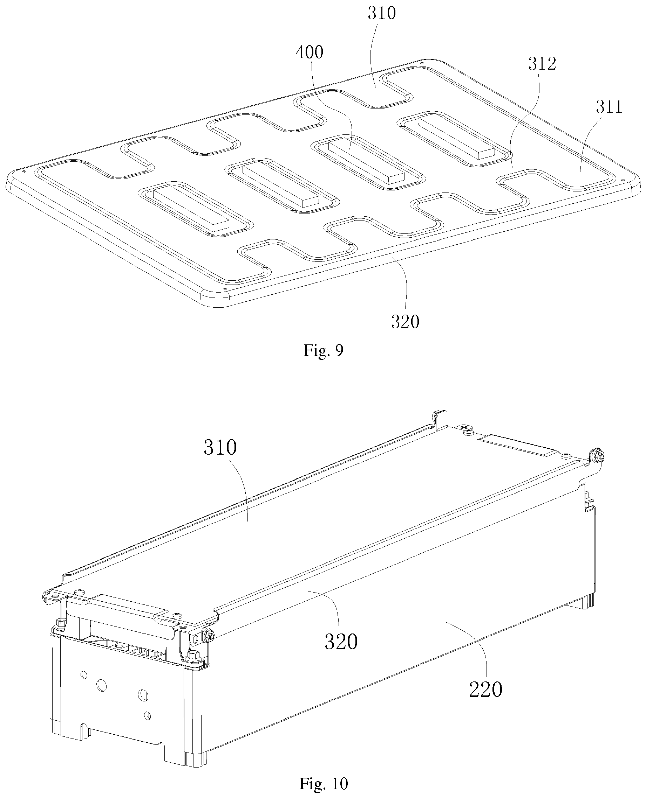

Alternatively, referring to Figs. 10-12, in other optional embodiments, the protection plate 310 and the guide plate 320 are separately disposed. It reduces the assembly difficulty of the protection assembly 300, and the protection assembly 300 can be conveniently installed in the energy storage device.

When the protection plate 310 and the guide plate 320 are separately disposed, the guide plate 320 is L-shaped, and the guide plate 320 includes a connecting plate 321 and a baffle plate 322 connected at a predetermined angle. The baffle plate 322 is detachably connected to the protection plate 310 through the connecting plate 321. Then, a guide chamber 340 is formed between the baffle plate 322 and the side wall 220 of the energy storage unit 200.

The connection between the protection assembly 300 and the energy storage unit 200 is not limited herein. Since the protection plate 310 and the guide plate 320 are at a predetermined angle, a receiving groove is formed between the protection plate 310 and the guide plate 320. The protection assembly 300 can be directly fastened to the energy storage unit 200 through the receiving groove, such that at least part of the energy storage unit 200 is located in the receiving groove. Alternatively, in some optional embodiments, the energy storage device further comprises a mounting bracket, through which the protection assembly 300 is mounted to the energy storage unit 200.

The mounting bracket is not limited herein. For example, the mounting bracket comprises a plurality of mounting columns 500. The mounting columns 500 are disposed at the end plates 271 of the battery module 200b. The protection plate 310 is connected to the mounting columns 500 through bolts and the like.

In any of the above embodiments, the number of the energy storage units 200 is not limited herein. There can be one or two energy storage units 200. When there are two or more energy storage units 200, for each of the energy storage units 200, a protection assembly 300 is correspondingly provided. In particular, when the distance between two or more energy storage units 200 is relatively long, a protection assembly 300 is correspondingly provided for each of the energy storage units 200. Alternatively, more than one energy storage units 200 are disposed corresponding to one of the protection assemblies 300.

In any of the above embodiments, the number of the protection assemblies 300 is not limited. There can be one or more protection assemblies 300.

For example, when there are two energy storage units 200 which are separated by a long distance, each of the two energy storage units 200 is provided with a protection assembly 300. The dimensions of the two protection assemblies 300 may be uniform or inconsistent. When the dimensions of the top portions of the two energy storage units 200 are inconsistent, the dimension of the two protection assemblies 300 are inconsistent, as long as the protection assembly 300 comprises the protection plate 310, the guide plate 320 and the protection assembly 300 mates with the energy storage unit 200 to form the air flow passage 330 and the guide chamber 340.

As shown in Fig. 1 and Fig. 2, the energy storage device is a battery pack, and the battery pack comprises a case 110 and a cover 120. The energy storage unit 200 comprises a plurality of battery modules 200b. The battery modules 200b are generally arranged in two rows. The battery modules in one row has a uniform height, and the battery module in another row have different heights. When the battery modules 200b have a uniform height, the battery modules 200b can share one protection assembly 300, thus the number of the protection assemblies 300 can be reduced and the assembling can be simplified. When the battery modules 200b have different heights, the battery modules 200b of the same height can share one protection assembly 300.

In some optional embodiments, when the cover 120 is disposed at a side of the protection assembly 300 away from the energy storage unit 200, in order to prevent violent collision between the protection assembly 300 and the cover 120, a cushioning member 400 is provided at a surface of the protection plate 310 away from the energy storage unit 200. That is to say, the cushioning member 400 is provided at a surface of the protection plate 310 which otherwise contacts with the cover 120. The arrangement of the cushioning member 400 is not limited herein. For example, when the air flow recess 311 and the reinforcing portion 312 form grooves on the surface of the protection plate 310, the cushioning member 400 is disposed in the groove and protrudes from the surface of the protection plate 310. It can ensure the stability of the relative position between the cushioning member 400 and the protection plate 310, and prevent the cushioning member 400 from being forced to move relative to the protection plate 310.

In any of the above embodiments, the materials of the protection plate 310 and the guide plate 320 are not limited herein. In order to improve the fire resistance, at least one of the protection plate 310 and the guide plate 320 is made of high temperature resistant mica.

The present disclosure may be embodied in other specific forms without departing from the essential characteristics. For example, the algorithms described in the specific embodiments can be modified, and the system architecture does not depart from the disclosure. The presented embodiments shall be considered in all respects as illustrative but not restrictive. The scope of the present disclosure is defined by the appended claims rather than the foregoing description, and all modifications within the meaning and scope of the claims are intended to be included within the scope of the disclosure.

## Claims

1. An energy storage device, **characterized in that**, comprising:
an energy storage unit (200) comprising a top wall (210) and a side wall (220) connected to a periphery of the top wall (210); and
a protection assembly (300) disposed to cover the top wall (210), wherein the protection assembly (300) comprises a protection plate (310) and a guide plate (320) connected to a periphery of the protection plate (310),
wherein the protection plate (310) and the guide plate (320) are connected at a predetermined angle, the protection plate (310) is disposed corresponding to the top wall (210) to form an air flow passage (330) between the protection plate (310) and the top wall (210), at least a portion of the guide plate (320) and the side wall (220) are spaced apart to form a guide chamber (340) between the guide plate (320) and the side wall (220), and the air flow passage (330) is in communication with the guide chamber (340),
the protection plate (310) comprises an air flow recess (311) disposed corresponding to the energy storage unit (200), wherein the air flow recess (311) is formed by the protection plate (310) protruding away from the energy storage unit (200),
the energy storage unit (200) is a secondary battery (200a), which comprises a top cover (240) and a housing (230) connected to a periphery of the top cover (240), wherein the top wall (210) is a top surface (241) of the top cover (240), and the side wall (220) is a side surface (231) of the housing (230), and the energy storage device is a battery pack which comprises a case (110) having an opening, and a plurality of the secondary batteries (200a) are located in the case (110), wherein the battery pack further comprises a cover (120) disposed at the opening, and the protection assembly (300) is disposed between the cover (120) and the secondary batteries (200a); or
the energy storage unit (200) is a battery module (200b) which comprises a plurality of secondary batteries (200a) disposed side by side, wherein the secondary battery (200a) comprises a top cover (240) and a housing (230) connected to a periphery of the top cover (240), the top wall (210) is a top surface (241) of the top cover (240), and the side wall (220) is a side surface (231) of the housing (230), and the energy storage device is a battery pack which comprises a case (110) having an opening, and a plurality of the battery modules (200b) are located in the case (110), wherein the battery pack further comprises a cover (120) disposed at the opening, and the protection assembly (300) is disposed between the cover (120) and the battery modules (200b),
the top cover (240) of the secondary battery (200a) comprises a vent (211), the air flow recess (311) comprises a first region (311a) and a second region (311b) located at a periphery of the first region (311a), the first region (311a) is disposed corresponding to the vent (211), and the first region (311a) has a thickness larger than that of the second region (311b).

2. The energy storage device according to claim 1, **characterized in that**,
the air flow recess (311) extends in a first direction (Y) in the protection plate (310); and
the protection plate (310) further comprises a reinforcing portion (312) extending in a second direction (X) intersecting with the first direction (Y), wherein the reinforcing portion (312) is formed by the protection plate (310) protruding away from the energy storage unit (200).

3. The energy storage device according to claim 1 or 2, **characterized in that**,
the protection plate (310) and the guide plate (320) are integrally formed; or
the protection plate (310) and the guide plate (320) are separately disposed, the guide plate (320) is L-shaped and comprises a connecting plate (321) and a baffle plate (322) connected at a predetermined angle, and the baffle plate (322) is detachably connected to the protection plate (310) through the connecting plate (321).

4. The energy storage device according to any of claims 1 to 3, **characterized in that**, a cushioning member (400) is provided at an outer surface of the protection plate (310) away from the energy storage unit (200).

5. The energy storage device according to any of claims 1 to 4, **characterized in that**, the predetermined angle is in a range of 90 degree to 120 degree.

## Patentansprüche

1. Energiespeichervorrichtung, **dadurch gekennzeichnet, dass** sie Folgendes umfasst:
eine Energiespeichereinheit (200) mit einer oberen Wand (210) und einer Seitenwand (220), die mit einem Umfang der oberen Wand (210) verbunden ist; und
eine Schutzanordnung (300), die angeordnet ist, um die obere Wand (210) abzudecken, wobei die Schutzanordnung (300) eine Schutzplatte (310) und eine Führungsplatte (320) umfasst, die mit einem Umfang der Schutzplatte (310) verbunden ist,
wobei die Schutzplatte (310) und die Führungsplatte (320) in einem vorbestimmten Winkel verbunden sind, die Schutzplatte (310) entsprechend der oberen Wand (210) angeordnet ist, um einen Luftströmungskanal (330) zwischen der Schutzplatte (310) und der oberen Wand (210) zu bilden, zumindest ein Teil der Führungsplatte (320) und der Seitenwand (220) voneinander beabstandet sind, um eine Führungskammer (340) zwischen der Führungsplatte (320) und der Seitenwand (220) zu bilden und der Luftströmungskanal (330) mit der Führungskammer (340) in Verbindung steht,
die Schutzplatte (310) eine korrespondierend zu der Energiespeichereinheit (200) angeordnete Luftströmungsausnehmung (311) umfasst, wobei die Luftströmungsaussparung (311) durch die von der Energiespeichereinheit (200) weg vorstehende Schutzplatte (310) gebildet wird,
die Energiespeichereinheit (200) eine Sekundärbatterie (200a) ist, die eine obere Abdeckung (240) und ein mit einem Umfang der oberen Abdeckung (240) verbundenes Gehäuse (230) umfasst, wobei die obere Wand (210) eine obere Fläche (241) der oberen Abdeckung (240) ist, und die Seitenwand (220) eine Seitenfläche (231) des Gehäuses (230) ist, und die Energiespeichervorrichtung ein Batteriepack ist, das eine Hülle (110) mit einer Öffnung umfasst, und eine Vielzahl der Sekundärbatterien (200a) in der Hülle (110) angeordnet sind, wobei der Batteriepack ferner eine Abdeckung (120) umfasst, die an der Öffnung angeordnet ist, und die Schutzanordnung (300) zwischen den Abdeckung (120) und die Sekundärbatterien (200a) angeordnet ist; oder
die Energiespeichereinheit (200) ein Batteriemodul (200b) ist, das mehrere nebeneinander angeordnete Sekundärbatterien (200a) umfasst, wobei die Sekundärbatterie (200a) eine obere Abdeckung (240) und ein Gehäuse (230) umfasst, die obere Wand (210) eine obere Fläche (241) der oberen Abdeckung (240) ist, und die Seitenwand (220) eine Seitenfläche (231) des Gehäuses (230) ist, und die Energiespeichervorrichtung ein Batteriepack ist, das eine Hülle (110) mit einer Öffnung umfasst, und eine Vielzahl der Batteriemodule (200b) in der Hülle (110) angeordnet sind, wobei das Batteriepack ferner eine Abdeckung umfasst (120),die an der Öffnung angeordnet ist, und die Schutzanordnung (300) zwischen der Abdeckung (120) und den Batteriemodulen (200b) angeordnet ist.
die obere Abdeckung (240) der Sekundärbatterie (200a) ein Ventil (211) umfasst, die Luftstromaussparung (311) einen ersten Bereich (311a) und einen zweiten Bereich (311b) umfasst, der sich an einer Peripherie des ersten Bereichs (311a) befindet, der erste Bereich (311a) entsprechend dem Ventil (211) angeordnet ist, und der erste Bereich (311a) eine Dicke aufweist, die größer als die des zweiten Bereichs (311b) ist.

2. Energiespeichervorrichtung nach Anspruch 1, **dadurch gekennzeichnet, dass**
Sich die Luftstromaussparung (311) in einer ersten Richtung (Y) in der Schutzplatte (310) erstreckt; und
die Schutzplatte (310) ferner einen Verstärkungsabschnitt (312) umfasst, der sich in einer zweiten Richtung (X) erstreckt, die sich mit der ersten Richtung (Y) schneidet, wobei der Verstärkungsabschnitt (312) durch die Schutzplatte (310) gebildet wird, die von der Energiespeichereinheit (200) vorsteht.

3. Energiespeichervorrichtung nach Anspruch 1 oder 2, **dadurch gekennzeichnet, dass**
die Schutzplatte (310) und die Führungsplatte (320) einstückig ausgebildet sind; oder
die Schutzplatte (310) und die Führungsplatte (320) getrennt angeordnet sind, die Führungsplatte (320) L-förmig ist und eine Verbindungsplatte (321) und eine Prallplatte (322) umfasst, die in einem vorbestimmten Winkel verbunden sind, und die Prallplatte (322) durch die Verbindungsplatte (321) lösbar mit der Schutzplatte (310) verbunden ist.

4. Energiespeichervorrichtung nach einem der Ansprüche 1 bis 3, **dadurch gekennzeichnet, dass** an einer Außenfläche der Schutzplatte (310) weg von der Energiespeichereinheit (200) ein Dämpfungselement (400) vorgesehen ist.

5. Energiespeichervorrichtung nach einem der Ansprüche 1 bis 4, **dadurch gekennzeichnet, dass** der vorbestimmte Winkel in einem Bereich von 90 Grad bis 120 Grad liegt.

## Revendications

1. Dispositif de stockage d'énergie, **caractérisée en ce qu'**il comprend :
une unité de stockage d'énergie (200) comprenant une paroi supérieure (210) et une paroi latérale (220) connectée à une périphérie de la paroi supérieure (210) ; et
un ensemble protecteur (300) disposé pour couvrir la paroi supérieure (210), dans lequel l'ensemble protecteur (300) comprend une plaque protectrice (310) et une plaque de guidage (320) connectées à une périphérie de la plaque protectrice (310),
dans lequel la plaque protectrice (310) et la plaque de guidage (320) sont reliées en formant un angle prédéterminé, la plaque protectrice (310) est disposée en correspondant à la paroi supérieure (210) pour délimiter un passage de flux d'air (330) entre la plaque protectrice (310) et la paroi supérieure (210), au moins une partie de la plaque de guidage (320) et la paroi latérale (220) sont disposées à l'intervalle pour former une chambre de guidage (340) entre la plaque de guidage (320) et la paroi latérale (220), et le passage de flux d'air (330) est en communication avec la chambre de guidage (340),
la plaque protectrice (310) comprend un évidement de flux d'air (311) disposé en correspondant à l'unité de stockage d'énergie (200), dans lequel l'évidement de flux d'air (311) est formé par la plaque protectrice (310) faisant saillie de l'unité de stockage d'énergie (200),
l'unité de stockage d'énergie (200) est une batterie secondaire (200a), qui comprend un couvercle supérieur (240) et un logement (230) connecté à une périphérie du couvercle supérieur (240), dans lequel la paroi supérieure (210) constitue une surface supérieure (241) du couvercle supérieur (240), la paroi latérale (220) constitue une surface latérale (231) du logement (230), le dispositif de stockage d'énergie est un bloc de batteries qui comprend un boîtier (110) pourvu d'une ouverture, et une pluralité de batteries secondaires (200a) sont logées dans le boîtier (110), dans lequel le bloc de batteries comprend en outre un couvercle (120) disposé au niveau de l'ouverture, et l'ensemble protecteur (300) est disposé entre le couvercle (120) et les batteries secondaires (200a) ; ou
l'unité de stockage d'énergie (200) est un module de batterie (200b), qui comprend une pluralité de batteries secondaires (200a) disposées côté à côté, dans lequel chaque batterie secondaire (200a) comprend un couvercle supérieur (240) et un logement (230) connecté à une périphérie du couvercle supérieur (240), la paroi supérieure (210) constitue une surface supérieure (241) du couvercle supérieur (240), la paroi latérale (220) constitue une surface latérale (231) du logement (230), le dispositif de stockage d'énergie est un bloc de batteries qui comprend un boîtier (110) pourvu d'une ouverture, et une pluralité de modules de batterie (200b) sont logés dans le boîtier (110), dans lequel le bloc de batteries comprend en outre un couvercle (120) disposé au niveau de l'ouverture, et l'ensemble protecteur (300) est disposé entre le couvercle (120) et les modules de batterie (200b),
le capot supérieur (240) de la batterie secondaire (200a) comprend un évent (211), et l'évidement de flux d'air (311) comprend une première zone (311a) disposée en correspondant à l'évent (211) et une deuxième zone (311b) disposée à une périphérie de la première zone (311a), la première zone (311a) présentant une épaisseur supérieure à celle de la deuxième zone (311b).

2. Dispositif de stockage d'énergie selon la revendication 1, **caractérisée en ce que**,
l'évidement de flux d'air (311) s'étend dans une première direction (Y) dans la plaque protectrice (310); et
la plaque protectrice (310) comprend en outre une partie de renfort (312) s'étendant dans une deuxième direction (X) coupant la première direction (Y), laquelle partie de renfort (312) est formée par la plaque protectrice (310) s'éloignant de l'unité de stockage d'énergie (200).

3. Dispositif de stockage d'énergie selon la revendication 1 ou 2, **caractérisée en ce que**,
la plaque protectrice (310) et la plaque de guidage (320) sont réalisées d'un seul tenant ; ou
la plaque protectrice (310) et la plaque de guidage (320) sont disposées séparément, la plaque de guidage (320) est en forme L et comprend une plaque de liaison (321) et un déflecteur (322) reliée en formant un angle prédéterminé, et le déflecteur (322) est relié de manière amovible à la plaque protectrice (310) par l'intermédiaire de la plaque de liaison (321).

4. Dispositif de stockage d'énergie selon l'une quelconque des revendications 1 à 3, **caractérisé en ce qu'**un composant amortisseur (400) est prévu sur une surface extérieure de la plaque protectrice (310) éloignée de l'unité de stockage d'énergie (200).

5. Dispositif de stockage d'énergie selon l'une quelconque des revendications 1 à 4, **caractérisé en ce que** l'angle prédéterminé est comprise dans une plage de 90 degrés à 120 degrés.
